# EUROPÄISCHE PATENTSCHRIFT

(11) **EP 1 320 651 B1**
(45) Veröffentlichungstag und Bekanntmachung des Hinweises auf die Patenterteilung: **08.03.2006**
(21) Anmeldenummer: 01969642.6
(22) Anmeldetag: 24.08.2001
(51) Int. Cl.: E04H 17/12, E04H 17/20, A01G 17/14

(54) **PFAHL AUS PROFILGEWALZTEM METALLBLECH FÜR DEN WEIN- ODER OBSTBAU**
POST CONSISTING OF ROLL-FORMED SHEET METAL FOR WINE-GROWING OR FRUIT FARMING
POTEAU EN TOLE METALLIQUE PROFILEE LAMINEE POUR LA CULTURE DE LA VIGNE OU DES FRUITS

(30) Priorität: 29.08.2000 DE 10054949; 07.02.2001 DE 10105831
(43) Veröffentlichungstag der Anmeldung: 25.06.2003
(73) Patentinhaber: Voestalpine Präzisionsprofil GmbH, 50354 Hürth (DE)
(72) Erfinder: SCHWARZBECK, Armin, 67269 Grünstadt (DE)
(74) Vertreter: Gesthuysen, von Rohr & Eggert
(86) Internationale Anmeldenummer: PCT/EP2001/009797
(87) Internationale Veröffentlichungsnummer: WO 2002/018730

(56) Entgegenhaltungen:
- FR-A- 2 311 497
- FR-A- 2 611 428
- FR-A- 2 712 141
- US-A- 5 899 041

## Beschreibung

Die Erfindung betrifft einen Pfahl aus profilgewalztem Metallblech für den Wein- oder Obstbau, insbesondere einen Weinbergpfahl, mit einem im wesentlichen U-förmigen Querschnitt, mit einem U-Rücken und mit zwei U-Schenkeln, die in ihrem Endbereich abgebogen sind, und mit Mitteln zur Aufnahme von Drähten, wobei die Mittel durch Ausstanzen und/oder Formbiegen aus den U-Schenkeln gebildet sind.

Derartige Pfähle, die auch als Spalierpfähle, Stützpfähle oder Zeilenpfähle, bzw. wenn sie im Weinbau eingesetzt werden als Weinbergpfähle oder Weinbaupfähle bezeichnet werden, werden seit vielen Jahren verwendet. Die Pfähle werden dabei meist zeilenweise zueinander angeordnet, wobei die Pfähle im wesentlichen senkrecht in den Erdboden hineingedrückt werden. Ursprünglich wurde zur Befestigung der zwischen den einzelnen Pfählen einer Zeile gespannten Drähte überwiegend Holzpfähle verwendet, an denen die Drähte mit Hilfe von Haken oder Krampen befestigt wurden. Daneben wurden wegen der besseren Haltbarkeit teilweise auch Betonpfähle eingesetzt.

Mit der zunehmenden Verbreitung von landwirtschaftlichen Maschinen, insbesondere von sogenannten Vollerntemaschinen, sind die Holz- und Betonpfähle immer weiter zurückgedrängt worden. Die Betonpfähle verursachen zu starke Beschädigungen an den Vollerntemaschinen und sind außerdem zu spröde und damit bruchgefährdet. Bei den Holzpfählen besteht das Problem darin, daß sich bei der maschinellen Ernte die in die Holzpfähle eingeschlagenen Haken und Krampen lösen, was zum einen zu einer Beschädigung der Drahtrahmen führt, zum anderen gelangen die Haken und Krampen zusammen mit den Trauben in die Pressen und Maischepumpen, wo es zu Beschädigungen kommen kann.

Aus diesen Gründen werden seit mehreren Jahren zunehmend aus profilierten bzw. profilgewalzten Metallblechen, insbesondere Stahlblechen, hergestellte Pfähle verwendet. Zunächst sind einfach profilierte Pfähle mit aus dem Blech ausgestanzten und formgebogenen Haken zum Einhängen und Befestigen der Drähte verwendet worden. Diese Pfähle haben jedoch den Nachteil, daß durch die Schlagstäbe der Vollerntemaschinen die Haken regelmäßig beschädigt, insbesondere zusammengedrückt, werden und somit die Haken vor dem Umhängen der Drähte wieder von Hand aufgebogen werden müssen.

Aufgrund dieser Nachteile sind diese zunächst ausschließlich verwendeten einfachen Pfähle in vielen Gebieten durch Pfähle, die aus profilierten Stahlblech hergestellten sind und innenliegende Haken aufweisen, verdrängt worden. Diese Pfähle, wie z.B. jene aus den Dokumenten FR 2 611 428 und US 5 899 041, haben einen etwa U-förmigen Querschnitt, wobei an den beiden U-Schenkeln nach außen vorspringende Längsrippen mit ihrerseits etwa U-förmigen Querschnitt ausgebildet sind. Aus diesen Längsrippen ist ein Teil der Wandung herausgestanzt und zur Bildung des innenliegenden Hakens abgebogen.

Die bekannten Pfähle werden üblicherweise aus geeignetem Bandstahl im Walzverfahren kalt oder warm geformt. Die Pfähle, bei denen die zur Aufnahme der Drähte benötigten Haken aus dem Bandstahl ausgestanzt werden, weisen neben dem grundsätzlich U-förmigen Querschnitt häufig eine Vielzahl von eingewalzten Sicken auf, wodurch die Stand- und Verwindungsfestigkeit der Pfähle erhöht wird. Zur Erzielung eines ausreichenden Korrosionsschutzes der Pfähle wird in der Regel verzinktes Stahlband verwendet. Der Korrosionsschutz kann durch Stückverzinkung d. h. durch Verzinkung der fertigen Pfähle, weiter erhöht werden. Daneben kann das Bandmaterial oder der einzelne Pfahl beschichtet, insbesondere galvan-beschichtet, galvan-verzink, sendzimir-verzinkt oder lackiert werden. Auch ist es möglich, den Pfahl aus Edelstahl, aus einer Aluminium-Legierung oder einer anderen korrosionsbeständigen, aber denn noch walzbaren und stanzbaren Metall-Legierung herzustellen.

Die eingangs beschriebenen Pfähle werden senkrecht in den Boden hineingedrückt, neuerdings auch mit Hilfe von landwirtschaftlichen Maschinen in den Boden gerammt, was zu einer erhöhten Beanspruchung des Pfahls führt. Der Pfahl wird dabei meist in einem Zug durch die Maschine in den Boden gerammt, wobei der Pfahl auch bei festem Erdboden nicht ausknicken soll. Lediglich wenn der Erdboden sehr steinig ist oder Steinplatten im Erdboden vorhanden sind, wird mit einer Lanze ein Setzloch für den Pfahl vorgearbeitet.

Darüber hinaus besteht bei den bekannten Pfählen das Problem, daß der Draht im Laufe der Zeit aushängt, d. h. aus den am Pfahl ausgebildeten Haken herausrutscht. Das Aushängen der Drähte kann dabei sowohl durch statische als auch durch dynamische Vorgänge hervorgerufen werden. Ein Aushängen der Drähte aufgrund dynamischer Vorgänge kann zum Beispiel durch böigen Wind oder rhythmisch arbeitende landwirtschaftliche Maschinen verursacht werden. Daneben besteht die Gefahr des Aushängens der Drähte dadurch, daß die Drähte im Verlauf des Jahres durch die Last der Trauben nach unten gedrückt werden. Je nach Gestaltung der Haken und nach dem Profil des Weinberges können dadurch Drähte, die zunächst im oberen Bereich eines Hakens anliegen, durch das Gewicht der Trauben nach unten und schließlich aus dem Haken herausgezogen werden.

Bei den bekannten Pfählen ist darüber hinaus das Einhängen oder Umhängen der Drähte - sowohl maschinell als auch von Hand - nur mit großem Aufwand möglich, wenn die Haken am Pfahl so ausgerichtet sind, daß die Öffnung zum Einhängen der Drähte unter einem Winkel zur Drahtrichtung verläuft. In diesem Fall muß der Draht abgebogen bzw. abgekröpft werden, um ihn in den Haken einzuhängen. Insbesondere unter der Last der Trauben, d. h. beim Umhängen des Drahtes aus einem Haken einer ersten Ebene in einen Haken einer zweiten Ebene, ist dafür ein großer Kraftaufwand erforderlich.

Dieses Problem wird dann noch zusätzlich verstärkt, wenn sich der Pfahl in einer Hanglage befindet, was regelmäßig der Fall ist. Dann muß darauf geachtet werden, daß die Schrägstellung der Öffnung des Hakens entgegengesetzt zur Hanglage verläuft, da sich ansonsten die Aushänggefahr für den Draht vergrößert. Um dies zu verhindern, muß dann der Pfahl um seine Längsachse gedreht werden, wodurch zwar die Aushänggefahr verringert wird, auf der anderen Seite der Draht jedoch beim Einhängen oder Umhängen noch stärker abgebogen bzw. abgekröpft werden muß.

Der vorliegenden Erfindung liegt daher die Aufgabe zugrunde, einen eingangs beschriebenen Pfahl aus profilgewalztem Metallblech dahingehend zu verbessern, daß der Pfahl eine hohe Standfestigkeit im Erdboden aufweist, das Ein- und Umhängen der Drähte einfach durchzuführen ist und dennoch ein ungewolltes Aushängen der Drähte aus den Aufnahmen oder Haken sicher verhindert wird.

Diese Aufgabe ist zunächst und im wesentlichen dadurch gelöst, daß die Endbereiche der U-Schenkel im wesentlich U-förmig nach außen abgebogen sind, so daß die Endbereiche der U-Schenkel offene Rinnen bilden, wobei in den Rinnen zusätzliche Mittel zur Aufnahme der Drähte durch Ausstanzen und/oder Formbiegen aus den Rinnen ausgebildet sin, so daβ die Drähte im wesentlichen in Längsrichtung der U-Schenkeln anfgenommen werden. Dadurch, daß erfindungsgemäß die Endbereiche der U-Schenkel nach außen und nicht - wie im Stand der Technik üblich - nach innen abgebogen sind, ergibt sich zunächst eine deutlich größere Querschnittsfläche des Pfahls. Durch die Ausbildung der Rinnen erhöht sich darüber hinaus auch das Volumen der von dem Pfahl beim Eintreiben in den Erdboden umschlossenen Erdsäule. Beide Größen - Querschnittsfläche des Pfahles und Volumen der umschlossenen Erdsäule - beeinflussen wesentlich die Standfestigkeit eines Pfahles, so daß der erfindungsgemäß ausgestaltete Pfahl eine deutlich verbesserte Standfestigkeit aufweist.

Durch die nach außen abgebogenen Endbereiche der U-Schenkel weist der Pfahl ein offenes Querprofil auf, wodurch ein Festsetzen oder Verkeilen von Steinen im Inneren des Pfahls beim Eintreiben des Pfahles in den Erdboden verhindert wird. Hierdurch werden die Einschlageigenschaften des Pfahls deutlich verbessert. Schließlich kann durch die in den Rinnen ausgebildeten zusätzlichen Mittel zur Aufnahme der Drähte die Gefahr des Aushängens der Drähte deutlich verringert werden, ohne das Einhängen oder Umhängen der Drähte zu erschweren. Bei dem erfindungsgemäßen Pfahl werden die Drähte somit sowohl von einem an den U-Schenkel ausgebildeten Mittel zur Aufnahme, als auch von einem in den Rinnen ausgebildeten Mittel zur Aufnahme gehalten.

Vorteilhafterweise sind die Mittel zur Aufnahme der Drähte in den U-Schenkeln und die Mittel zur Aufnahme der Drähte in den Rinnen jeweils in Drahtrichtung paarweise hintereinanderliegend und im wesentlichen auf gleicher Höhe zueinander angeordnet. Dadurch ist ein einfaches Einhängen eines Drahtes möglich, ohne daß der Draht zwischen den beiden Mitteln zur Aufnahme abgebogen bzw. abgekröpft werden muß.

Gemäß einer bevorzugten Ausgestaltung der Erfindung sind die Mittel zur Aufnahme der Drähte in den Rinnen als nach außen offene Aufnahmetaschen ausgebildet. Eine Aufnahmetasche besteht dabei aus einem im Rücken der Rinnen ausgebildeten Aufnahmefenster und einer im Randbereich der Rinne ausgebildeten Zunge. Eine solche Aufnahmetasche stellt einen innen liegenden Haken dar, so daß die Aufnahmetasche und damit das Mittel zur Aufnahme des Drahtes durch die Schlagstäbe einer Vollerntemaschine nicht beschädigt wird.

Bei der Ausgestaltung der Mittel zur Aufnahme der Drähte an den U-Schenkeln gibt es verschiedene Möglichkeiten. Gemäß einer ersten vorteilhaften Alternative der Erfindung ist an den U-Schenkeln mindestens eine nach außen vorstehende Längsrippe ausgebildet, wobei die Längsrippen einen nach innen offenen, im wesentlichen U-förmigen Querschnitt aufweisen und in den Längsrippen nach außen offene Aufnahmetaschen zur Aufnahme der Drähte ausgebildet sind. Eine Aufnahmetasche wird durch eine in U-Rücken der Längsrippe ausgebildete Zunge und je ein in den U-Schenkeln der Längsrippe ausgebildetes Aufnahmefenster gebildet, wobei die beiden Aufnahmefenster durch einen zwischen der Zunge und dem U-Rücken gebildeten Schlitz miteinander verbunden sind. Die beiden Aufnahmefenster sind dabei so zueinander angeordnet, daß sie in Drahtrichtung zueinander fluchten, die beiden Aufnahmefenster also deckungsgleich sind. Ein Draht kann somit durch den Schlitz in die Aufnahmetasche eingelegt werden, so daß sich der Draht dann durch die beiden Aufnahmefenster hindurch erstreckt.

Bei der zuvor beschriebenen Ausbildung der Aufnahmetasche in den Längsrippen der U-Schenkel wird somit ebenfalls ein innenliegender Haken als Mittel zur Aufnahme der Drähte realisiert.

Gemäß einer ersten alternativen Ausgestaltung der Erfindung ist an den U-Schenkeln je mindestens ein nach unten offener, zungenartiger Haken als Mittel zur Aufnahme eines Drahtes ausgebildet. Bei dieser alternativen Ausgestaltung des erfindungsgemäßen Pfahls entfällt somit die Ausbildung der nach außen vorstehenden Längsrippen an den U-Schenkeln. Dadurch wird bei im wesentlichen gleicher Querschnittsfläche des Pfahls zu dessen Herstellung nur ein Metallblech mit einer geringeren Breite benötigt. Es ergibt sich somit eine - insbesondere bei hohen Stückzahlen - nicht unerhebliche Materialersparnis.

Im einzelnen gibt es nun eine Vielzahl von Möglichkeiten, den erfindungsgemäßen Pfahl auszugestalten und weiterzubilden. Dazu wird verwiesen auf die dem Patentanspruch 1 nachgeordneten Patentansprüche sowie auf die Beschreibung bevorzugter Ausführungsbeispiele, in Verbindung mit der Zeichnung. In der Zeichnung zeigen
- Fig. 1: eine perspektivische Darstellung des oberen Endbereichs eines Weinbergpfahls gemäß einer ersten Ausgestaltung der Erfindung, mit einem Draht dargestellt in zwei unterschiedlichen Positionen,
- Fig. 2: eine Draufsicht auf ein flachliegendes Metallblech vor dem Umbiegen zu einem Weinbergpfahl, ähnlich dem in Fig. 1 dargestellten Weinbergpfahl,
- Fig. 3: eine perspektivische Darstellung ähnlich der Fig. 1 einer zweiten Ausführungsform eines Weinbergpfahls,
- Fig. 4: eine Draufsicht auf ein flachliegendes Metallblech, aus dem nach dem Profilwalzen ein Weinbergpfahl ähnlich der Fig. 3 entsteht,
- Fig. 5: einen Querschnitt durch einen Weinbergpiahl gemäß der Fig. 1,
- Fig. 6: eine Ansicht des oberen Bereichs eines Weinbergpfahls gemäß einer alternativen Ausgestaltung,
- Fig. 7: eine Ansicht des Weinbergpfahls gemäß der Fig. 6, um 90° gedreht,
- Fig. 8: einen Querschnitt durch einen Weinbergpfahls gemäß der zweiten Alternative,
- Fig. 9: eine vergrößerte Darstellung eines Teils des Weinbergpfahls gemäß der Fig. 7,
- Fig. 10: zwei schematische Darstellungen des oberen Bereichs eines Weinbergpfahls gemäß der zweiten Alternative der Erfindung, jeweils mit einem Draht dargestellt in zwei unterschiedlichen Positionen,
- Fig. 11: eine schematische Draufsicht auf einen in den Erdboden eingedrückten Weinbergpfahl gemäß dem Stand der Technik und einen erfindungsgemäßen Weinbergpfahl, zur Erläuterung der Standfestigkeit des Weinbergpfahls im Erdboden und
- Fig. 12: eine Darstellung eines Metallblechs zwischen zwei Profilwalzen, bei der Herstellung eines Weinbergpfahls.

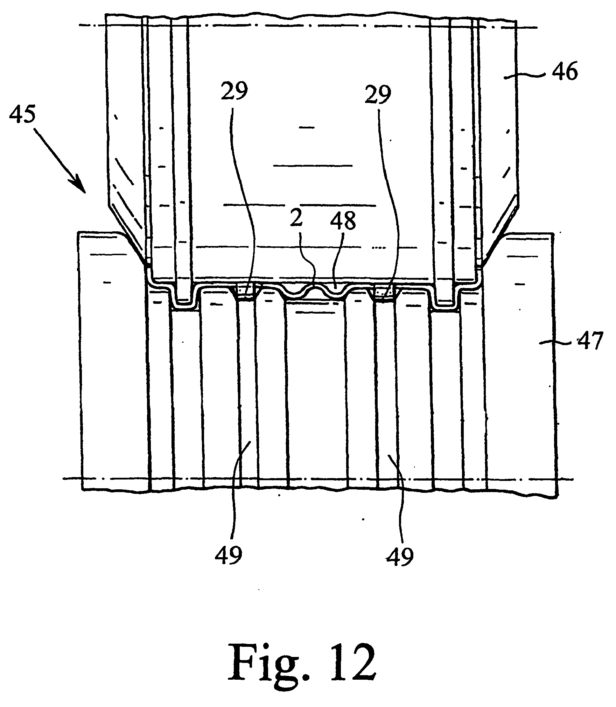

Der in den Figuren dargestellte Weinbergpfahl 1 wird aus einem - in Fig. 12 dargestellten - Metallblech 2 durch Profilwalzen hergestellt. Zur Erreichung eines ausreichenden Korrosionsschutzes wird der Weinbergpfahl 1, der meist aus Stahl besteht, in der Regel verzinkt oder beschichtet, wobei unterschiedliche Verzinkungsverfahren und/oder Beschichtungsverfahren, insbesondere die Stückverzinkung oder Feuerverzinkung, angewandt werden können. Der Weinbergpfahl 1 hat je nach Einsatzgebiet und damit je nach Anbaugebiet üblicherweise eine Länge zwischen 1,40 m bis 3,0 m, wobei das Metallblech 2 üblicherweise eine Breite von 1,0 m bis 3,0 m und eine Dicke von 1,25 mm bis 2,25 mm aufweist. Wird für das Metallblech 2 ein hochfester Stahl verwendet, so kann die Dicke des Metallblechs 2 auch auf ca. 0,9 mm reduziert sein.

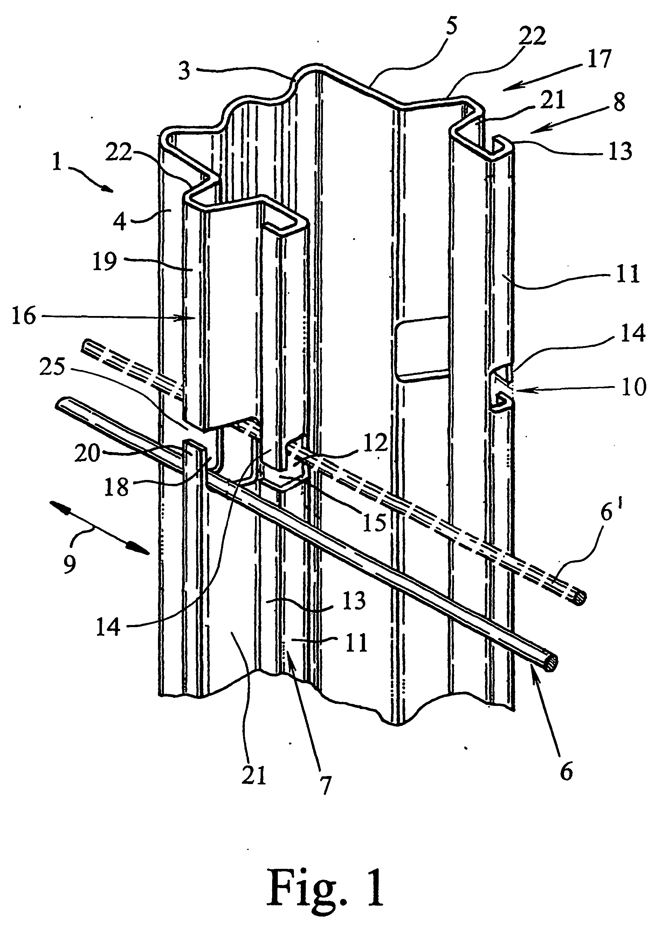

Insbesondere die Fig. 1, 3 und 6 zeigen lediglich den oberen Endbereich des Weinbergpfahls 1, wobei im aufgestellten Zustand des Weinbergpfahls 1 etwa die unteren 80 cm in den Erdboden eingesteckt sind. Die in den Fig. 1, 3 und 6 dargestellten unterschiedlichen Varianten des erfindungsgemäßen Weinbergpfahls 1 weisen jeweils einen im wesentlichen U-förmigen Querschnitt mit einem U-Rücken 3 und mit zwei U-Schenkeln 4, 5 auf. Über die Länge des Weinbergpfahls 1 sind eine Reihe von Mitteln zur Aufnahme von Drähten 6 in der Regel in jeweils gleichem Abstand zueinander angeordnet, wobei jedoch im unteren Bereich des Weinbergpfahls 1, der in den Erdboden eingesteckt wird, keine derartigen Mittel ausgebildet sind.

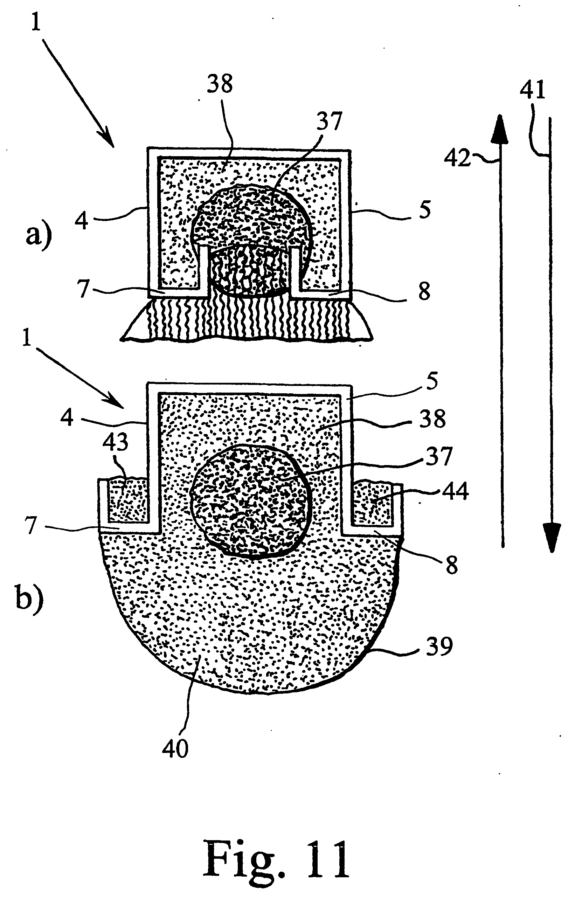

Der erfindungsgemäße Weinbergpfahl 1 unterscheidet sich von dem aus dem Stand der Technik bekannten Weinbergpfahl 1, wie er in Fig. 11a dargestellt ist, zunächst dadurch, daß die Endbereiche der U-Schenkel 4, 5 im wesentlichen U-förmig nach außen abgebogen sind, so daß die Endbereiche offene Rinnen 7, 8 bilden. Bei der Ausgestaltung des erfindungsgemäßen Weinbergpfahls 1 gemäß der - in den Fig. 1 bis 5 dargestellten - ersten Alternative sind die Mittel zur Aufnahme von Drähten 6 als nach außen offene Aufnahmetaschen 10 bzw. 18 ausgebildet. Die in den Rinnen 7, 8 ausgebildeten Aufnahmetaschen 10 und die in den U-Schenkeln 4, 5 ausgebildeten Aufnahmetaschen 18 sind dabei jeweils in Drahtrichtung 9 gesehen paarweise hintereinanderliegend und im wesentlichen auf gleicher Höhe angeordnet.

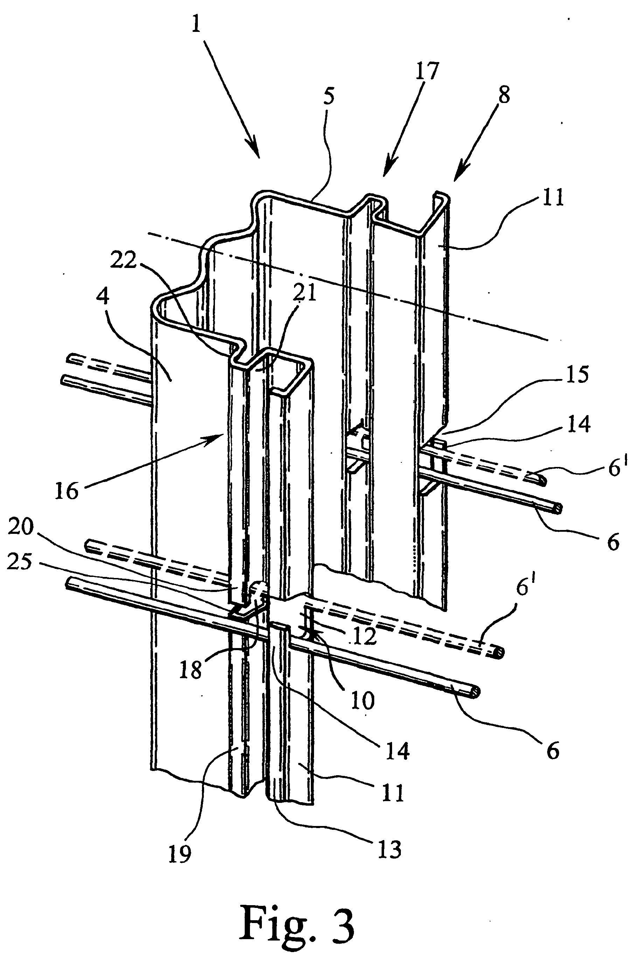

Die beiden obersten Aufnahmetaschen 10 bzw. 18 sind in einem Abstand von wenigen Zentimeter, beispielsweise von 5 cm vom oberen Rand des Weinbergpfahls 1 angeordnet. Nach unten weist der Weinbergpfahl 1 weitere, - hier nicht dargestellte - Aufnahmetaschen 10 bzw. 18 auf, die jeweils einen Abstand von beispielsweise 10 cm zueinander haben. Der Weinbergpfahl 1 ist zu seiner Mittelebene symmetrisch ausgebildet ist, so daß nachfolgend die weitere Ausgestaltung des Weinbergpfahls 1 vorwiegend anhand der vorderen Sichtseite der Fig. 1 bzw. der Fig. 3 beschrieben wird.

Die Aufnahmetasche 10 wird gebildet durch ein im Rücken 11 der Rinne 7 ausgebildetes Aufnahmefenster 12 und eine im Randbereich 13 der Rinne 7 ausgebildete Zunge 14. Die Aufnahmetasche 10 ist dabei insofern nach außen offen, als zwischen der Zunge 14 und dem Randbereich 13 der Rinne 7 ein Schlitz 15 gebildet ist, durch den der Draht 6 in die Aufnahmetasche 10 hineingelangen bzw. aus der Aufnahmetasche 10 herausgelangen kann. Wie insbesondere aus den Fig. 1, 3 und 5 ersichtlich ist, wird die U-förmige Rinne 7 außer aus dem Rücken 11 und dem, einen U-Schenkel bildenden, Randbereich 13 auch von dem Ende des U-Schenkels 4 gebildet. Die U-Form der Rinne 7 ist dabei im wesentlichen um 180° gedreht zur U-Form des Weinbergpfahls 1 ausgerichtet.

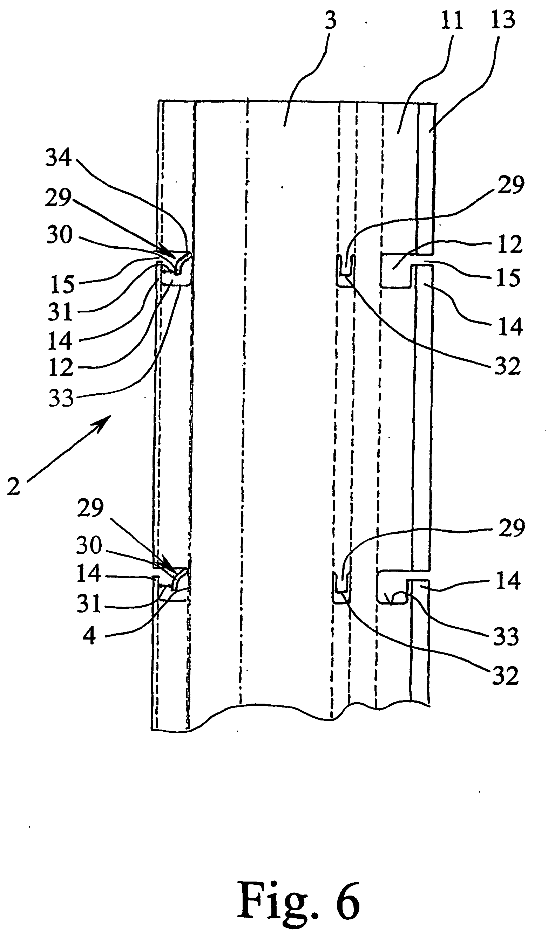

Bei der Ausgestaltung des Weinbergpfahls 1 gemäß den Fig. 1 und 3 ist - im Unterschied zu der Ausgestaltung des Weinbergpfahls 1 gemäß der Fig. 6 - an den U-Schenkeln 4, 5 jeweils eine nach außen vorstehende Längsrippe 16, 17 ausgebildet, die ihrerseits einen nach innen offenen, im wesentlichen U-förmigen Querschnitt aufweisen. Die Aufnahmetaschen 18 sind nun jeweils in den Längsrippen 16, 17 ausgebildet, wobei die Aufnahmetasche 18 eine im U-Rücken 19 der Längsrippe 16 bzw. 17 ausgebildete Zunge 20 und je ein in den U-Schenkeln 21, 22 ausgebildetes Aufnahmefenster 23, 24 aufweist. Die beiden Aumahmefenster 23, 24 der Aufnahmetasche 18 sind zum einen durch einen zwischen der Zunge 20 und dem U-Rücken 19 gebildeten Schlitz 25 miteinander verbunden, zum anderen so in den U-Schenkeln 21, 22 der Längsrippe 16 bzw. 17 angeordnet, daß die Aufnahmefenster 23, 24 in Drahtrichtung 9 zueinander fluchten, die Aufnahmefenster 23, 24 somit sowohl gleich ausgebildet, als auch auf derselben Höhe im Weinbergpfahl 1 angeordnet sind.

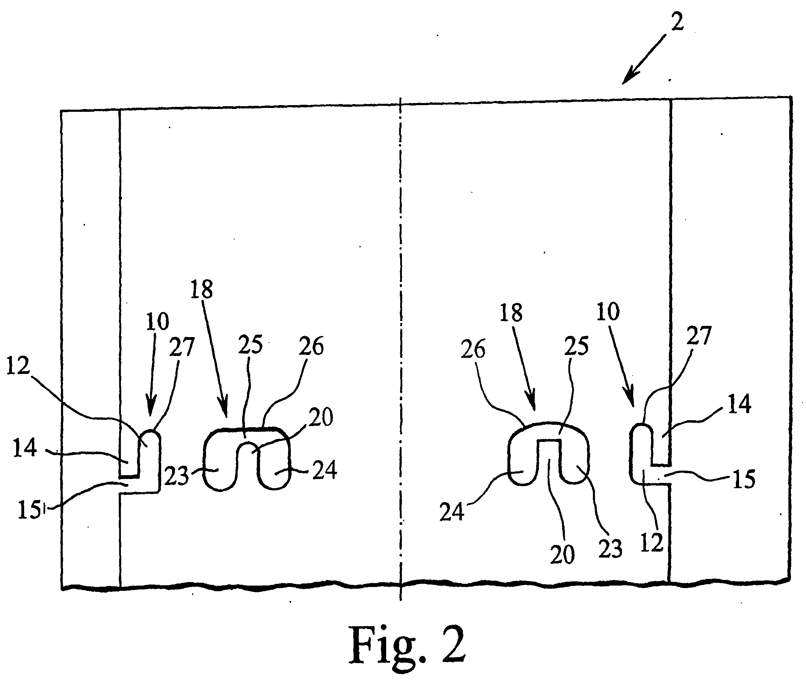

Die Fig. 1 und 2 bzw. 3 und 4 zeigen zwei unterschiedliche Ausführungsbeispiele eines Weinbergpfahls 1 gemäß einer ersten Alternative der Erfindung. Bei dem Ausführungsbeispiel gemäß der Fig. 1 bzw. 2 erstreckt sich die im Randbereich 13 der Rinne 7 ausgebildete Zunge 14 nach unten, so daß die Aufnahmetasche 10 nach oben geschlossen ist. Im Unterschied dazu erstreckt sich die im U-Rücken 19 der Längsrippe 16 ausgebildete Zunge 20 nach oben, so daß sich der Schlitz 25 im oberen Bereich der Aufnahmetasche 18 befindet, und die Aufnahmetasche 18 somit nach unten geschlossen ist. Die Aufnahmetasche 10 und die Aufnahmetasche 18 unterscheiden sich unter anderem dadurch, daß sich der Schlitz 15 im unteren Bereich der Aufnahmetasche 10 befindet, während der Schlitz 25 im oberen Bereich der Aufnahmetasche 18 angeordnet ist. Durch die unterschiedliche Ausbildung der Zunge 14 und der Zunge 20 bzw. die unterschiedliche Anordnung des Schlitzes 15 und des Schlitzes 25 ergibt sich auch eine unterschiedliche Funktion der Aufnahmetasche 10 bzw. der Aufnahmetasche 18.

Befindet sich der Draht 6' in der, in Fig. 1 gestrichelt dargestellten, oberen Position, was dann der Fall sein kann, wenn der entsprechende Weinbergpfahl 1 beispielsweise in einer Senke steht, so wird der Draht 6' durch die Aufnahmetasche 10, insbesondere die Zunge 14, daran gehindert, sich von dem Weinbergpfahl 1 zu lösen, d. h. auszuhängen. Befindet sich der Draht 6 dagegen in der, in Fig. 1 durchgezogen dargestellten, unteren Position, so wird der Draht 6 durch die Zunge 20 in der Aufnahmetasche 18 gehalten. Der Draht 6 liegt dann auf dem unteren Rand der Aufnahmetasche 18 auf. In die untere Position gelangt der Draht 6 beispielsweise dadurch, daß der Draht 6' im Laufe der Zeit durch die zunehmende Last der Trauben nach unten gezogen wird.

Der in Fig. 1 dargestellte Weinbergpfahl 1 ermöglicht es dem Draht 6 aus einer oberen Lage in eine untere Lage zu wandern, gewährleistet dabei jedoch stets, daß der Draht 6 mindestens in einer Aufnahmetasche 10, 18 gehalten wird, so daß sich der Draht 6 nicht von dem Weinbergpfahl 1 lösen, d. h. aushängen kann. Um nun ein Herauswandem des Drahtes 6' aus der Aufnahmetasche 10 zu ermöglichen, und um gleichzeitig zu gewährleisten, daß der Draht 6 in der Aufnahmetasche 18 gehalten wird, weist der U-Rücken 19 der Längsrippe 16 einen größeren Abstand zum U-Schenkel 4 auf als der Randbereich 13 der Rinne 7. Die Längsrippe 16 besitzt somit eine größere Tiefe als die Rinne 7, wie dies deutlich in Fig. 1 zu erkennen ist. Darüber hinaus ist natürlich auch der Schlitz 15 so dimensioniert, daß der Draht 6' bei seiner Bewegung aus der oberen Position in die untere Position durch den Schlitz 15 aus der Aufnahmetasche 10 herausgleiten kann. Der Draht 6 kann somit von alleine aus der oberen Position in die untere Position gelangen, wobei er zunächst durch die Aufnahmetasche 10 und dann durch die Aufnahmetasche 18 gehalten wird.

Bei dem in Fig. 1 dargestellten Weinbergpfahl 1 weisen die Aufnahmefenster 23, 24 in den U-Schenkeln 21, 22 der Längsrippe 16 eine größere Höhe auf als das Aumahmefenster 12 im Rücken 11 der Rinne 7. Im Unterschied dazu sind bei dem in Fig. 2 dargestellten Metallblech 2 die Aufnahmefenster 23, 24 und das Aufnahmefenster 12 gleich hoch. In beiden Fällen fluchtet jedoch der obere Rand 26 der Aufnahmefenster 23, 24 mit dem oberen Rand 27 des Aufnahmefensters 12. Dadurch ist gewährleistet, daß der Draht 6, wenn er durch den Schlitz 15 aus der Aufnahmetasche 10 herausgleitet in die Aufnahmetasche 18 "hineinfällt".

Das Einführen eines Drahtes 6 in die Aufnahmetaschen 10 und 18 erfolgt nun dadurch, daß der Draht 6 durch den Schlitz 25 in die Aufnahmetasche 18 gelegt und anschließend soweit nach unten und dann nach hinten gedrückt wird, daß der Draht 6 durch den Schlitz 15 in die Aufnahmetasche 10 gelangt. Hierzu weisen der Schlitz 15 und der Schlitz 25 jeweils eine Höhe von etwa 5 mm bis 6 mm auf, so daß übliche Drähte 6 mit einem Durchmesser bis zu etwas mehr als 3 mm problemlos in die Aufnahmetaschen 10, 18 eingeführt werden können. Selbstverständlich können auch kleinere Abmessungen für die Schlitze 15 und 25 gewählt werden, wenn Drähte 6 mit entsprechend kleinerem Durchmesser verwendet werden.

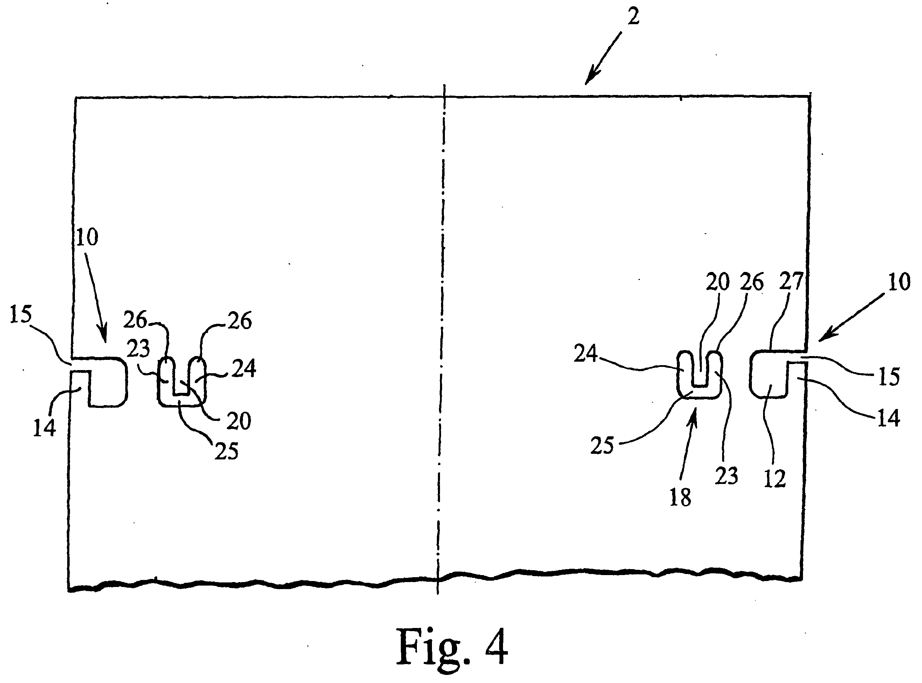

Im Unterschied zu dem zuvor beschriebenen ersten Ausführungsbeispiel des Weinbergpfahls 1 gemäß den Fig. 1 und 2 sind bei dem Weinbergpfahl 1 gemäß die Fig. 3 und 4 die Ausgestaltung und Funktion der Aufnahmetaschen 10 und 18 vertauscht. Dementsprechend erstreckt sich die im Randbereich 13 der Rinne 7 ausgebildete Zunge nach oben, so daß die Aufnahmetasche 10 nach unten geschlossen ist, während sich die im U-Rücken 19 der Längsrippe 16 ausgebildete Zunge 20 nach unten erstreckt, so daß sich der Schlitz 25 im unteren Bereich der Aufnahmetasche 18 befindet, die Aufnahmetasche 18 somit nach oben geschlossen ist.

Bei der in Fig. 3 dargestellten Ausführung des Weinbergpfahls 1 wird der Draht 6' in seiner oberen Position somit von der Aufnahmetasche 18 bzw. von der Zunge 20 gehalten, während der Draht 6 in seiner unteren Position durch die Zunge 14 der Aufnahmetasche 10 gesichert ist. Damit der Draht 6, wenn er sich aus seiner oberen Position in die untere Position bewegt, aus der Aufnahmetasche 18 in die Aufnahmetasche 10 "fällt", weisen bei dieser Ausführung des Weinbergpfahls 1 die Rinnen 7, 8 eine größere Tiefe als die Längsrippen 16, 17 auf.

Während bei dem in Fig. 4 dargestellten Metallblech 2 das Aufnahmefenster 12 in der Rinne 7 die gleiche Höhe wie die Aufnahmefenster 23 und 24 in der Längsrippe 16 aufweist, weist dem in Fig. 3 dargestellten Weinbergpfahl 1 das Aufnahmefenster 12 eine größere Höhe als die Aufnahmefenster 23 und 24 auf. In beiden Fällen fluchtet jedoch - ebenso wie bei den Ausgestaltungen gemäß den Fig. 1 und 2 - der obere Rand 27 des Aufnahmefensters 12 mit dem oberen Rand 26 der Aufnahmefenster 23 und 24.

Bezeichnet man die in den Fig. 1 und 3 durchgezogen dargestellte untere Position des Drahtes 6 als "normale" oder dauerhafte Lage des Drahtes 6, während die in den Fig. 1 und 3 gestrichelt dargestellte oberen Position des Drahtes 6' auch als Anfangsposition bezeichnet werden kann, so kann man bei Ausgestaltung des Weinbergpfahls 1 gemäß den Fig. 1 und 2 die Aufnahmetasche 18 gemäß ihrer Funktion auch als Haupthaken und die Aufnahmetasche 10 als Hilfshaken bezeichnen. Im Unterschied dazu bildet dann bei der Ausführungsform des Weinbergpfahls 1 gemäß den Fig. 3 und 4 die Aufnahmetasche 18 den Hilfshaken und die Aufnahmetasche 10 den Haupthaken.

Aus den Fig. 2 und 4 wird deutlich, daß die Aufnahmetaschen 10 und 18, insbesondere die Aufnahmefenster 12 bzw. 23 und 24, nicht völlig rechteckige Konturen haben, sondern die Kanten der Aufnahmefenster 12, 23 und 24 abgerundet sind. Dadurch wird eine Beschädigung des Drahtes 6 beim Einlegen oder Umhängen in den Aufnahmetaschen 10 und 18 verhindert.

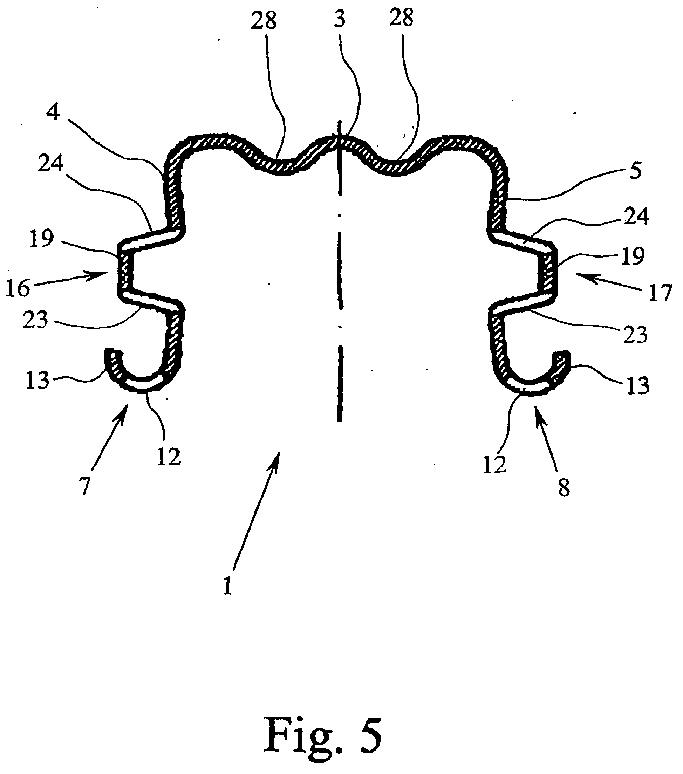

Aus dem in Fig. 5 dargestellten Querschnitt durch einen Weinbergpfahl 1 ist zum einen zu erkennen, daß die Ränder der im wesentlichen U-förmigen Rinnen 7, 8, d. h. der Rücken 11, der Randbereiche 13 und das Ende der U-Schenkel 4 bzw. 5 nicht absolut rechtwinklig zueinander abgeknickt sein müssen. Ebenso ist zu erkennen, daß auch der U-Rücken 19 und die U-Schenkel 21 und 22 der Längsrippen 16 und 17 unter einem Winkel ungleich 90°, vorzugsweise einem Winkel größer 90° zueinander verlaufen können. Weiter ist dargestellt, daß die U-Schenkel 4 und 5 über ihre Länge in sich leicht gebogen sein können, d. h. die beiden Bereiche seitlich der Längsrippen 16 bzw. 17 unter einem Winkel von 2° bis 5° zueinander verlaufen. Schließlich geht aus Fig. 5 - ebenso wie aus den Fig. 1 und 3 - hervor, daß der U-Rücken 3 des Weinbergpfahls 1 nicht eben sondern wellig verläuft, nämlich mehrere Sicken 28 aufweist. Diese Sicken 28 dienen zur Erhöhung der Stabilität des Weinbergpfahls 1.

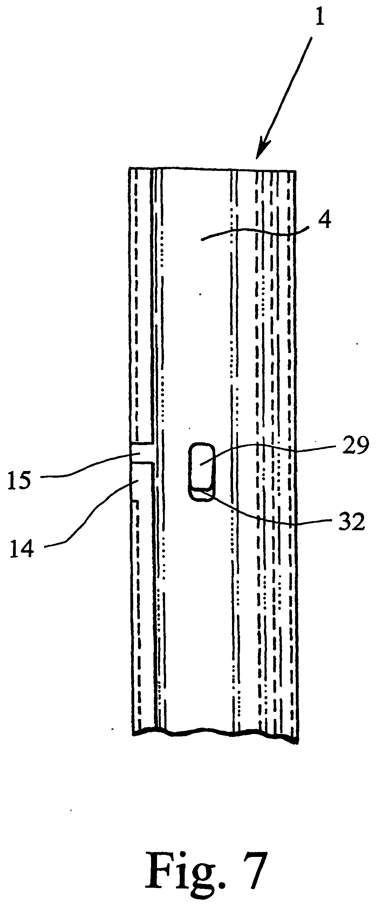

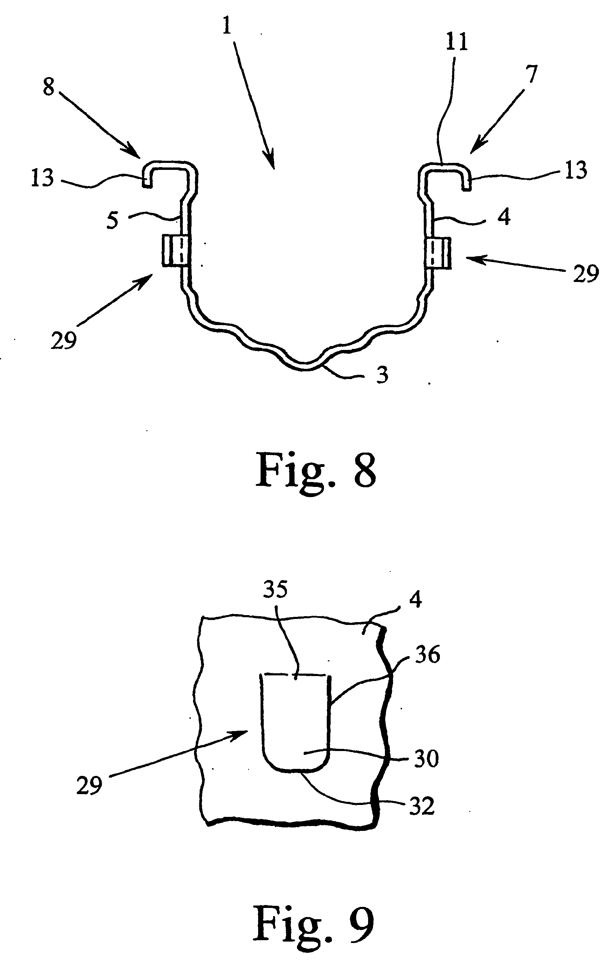

Die Fig. 6 bis 10 zeigen eine Ausführung eines Weinbergpfahls 1 gemäß einer zweiten Alternative der Erfindung. Hierbei sind an den U-Schenkeln 4 und 5 des Weinbergpfahls 1 je mindestens ein nach unten offener, zungenartiger Haken 29 als Mittel zur Aufnahme eines Drahtes 6 ausgebildet. Wie insbesondere in Fig. 8 zu erkennen ist, weisen bei dieser Ausgestaltung des Weinbergpfahls 1 die U-Schenkel 4, 5 keine Längsrippen 16, 17 auf, sondern sind im wesentlichen eben ausgebildet.

Bei dem in Fig. 6 dargestellten Metallblech 2 ist die linke Hälfte des Metallblech 2 bereits entsprechend dem fertigen Weinbergpfahl 1 umgebogen, während bei der rechten Hälfte des Metallblechs 2 dieses noch nicht umgebogen ist, sondern lediglich Ausstanzungen aufweist, aus denen die Aufnahmefenster 12 und die Haken 29 geformt werden.

Der Haken 29 verläuft mit seinem Hauptbereich 30 im wesentlichen parallel zum U-Schenkel 4 bzw. 5, wobei der Abstand zwischen dem Hauptbereich 30 des Hakens 29 und dem U-Schenkel 4 bzw. 5 etwas größer als der Durchmesser eines Drahtes 6 ist, beispielsweise ca. 4 mm beträgt. Wie insbesondere aus der linken Hälfte der Darstellung in Fig. 6 zu erkennen ist, erstreckt sich der Haken 29 in Drahtrichtung 9 gesehen innerhalb des im Rücken 11 der Rinne 7 angeordneten Aufnahmefensters 12. Dabei ist die lichte Weite 31 zwischen dem Hauptbereich 30 des Hakens 29 und der im Randbereich 13 der Rinne 7 ausgebildeten Zunge 14 etwas größer als der Durchmesser des Drahtes 6. Ebenso ist der Abstand zwischen dem unteren Rand 32 des Hakens 29 und dem unteren Rand 33 der Aufnahmetasche 10 etwas größer als der Durchmesser des Drahtes 6.

Durch diese Dimensionierung der Aufnahmetasche 10 und des Hakens 29 kann ein Draht 6 zunächst durch den Schlitz 15 in die Aufnahmetasche 10 eingeführt werden, anschließend zwischen der Zunge 14 und dem Hauptbereich 30 des Hakens 29 nach unten gedrückt und dann entlang des unteren Randes 33 der Aufnahmetasche 10 unter dem unteren Rand 32 des Hakens 29 vorbeigeführt werden, so daß der Draht 6 schließlich zwischen dem Haken 29 und dem U-Schenkel 4 bzw. 5 gelangt. Der Draht 6 befindet sich somit nach dem Einhängen im oberen Bogen 34 des Hakens 29, wobei sich der Draht 6 jedoch aufgrund des im Laufe der Zeit zunehmenden Gewichtes der Trauben nach unten bewegen kann und dabei durch die Zunge 14 gegen Aushängen gesichert ist. Ein Festklemmen des Drahtes 6 im Bogen 34 des Hakens 29 wird zum einen durch die zuvor beschriebene Dimensionierung und Ausbildung des Haken 29 weitestgehend verhindert, wird zum anderen durch die Schwerkraft des Drahtes 6 sowie durch dynamische Bewegungen beim Ernten oder Laubschneiden an dem Weinbergpfahl 1 entgegengewirkt.

Wie aus der rechten Hälfte der Darstellung der Fig. 6 zu erkennen ist, ist der mit dem U-Schenkel 4, 5 verbundene Fuß 35 des Hakens 29 mit dem oberen Rand 27 des Aumahmefenster 12 auf einer Höhe. Der in Fig. 9 vergrößert dargestellte Haken 29 wird dadurch aus dem U-Schenkel 4, 5 ausgebildet, daß der Haken 29 zunächst in einem Stanzvorgang entlang der Umfangslinie 36 freigeschnitten wird. Anschließend wird der Haken 29 unter einem Winkel von ca. 30° bis 60° vom U-Schenkel 4, 5 weggebogen, bevor der Hauptbereich 30 zurückgebogen wird, so daß der Hauptbereich 30 parallel zum U-Schenkel 4, 5 verläuft. Durch dieses zweifache Abbiegen wird zum einen der gewünschte Abstand zwischen dem Hauptbereich 30 und dem U-Schenkel 4, 5 und zum anderen der Abstand zwischen dem unteren Rand 32 des Hakens 29 und dem unteren Rand 33 der Aufnahmetasche 10 eingestellt.

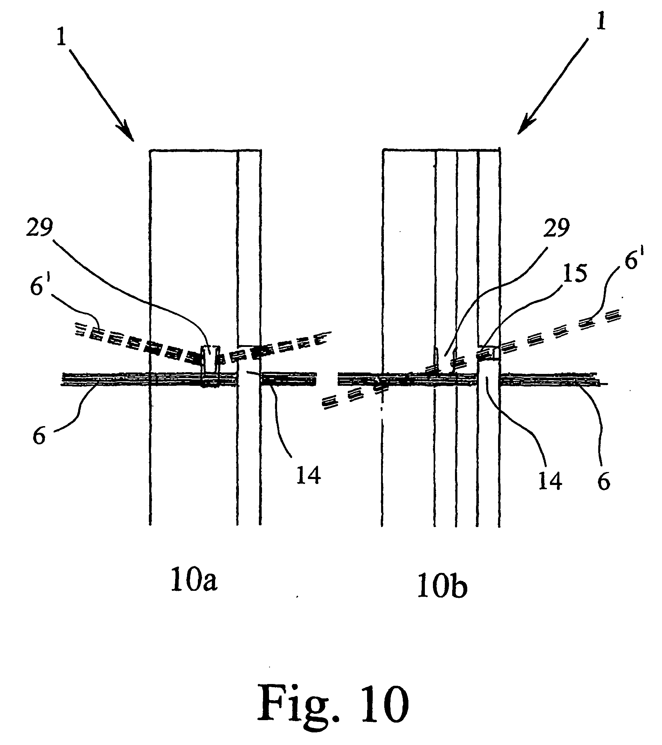

Die Fig. 10 zeigt einen Weinbergpfahl 1 gemäß der zweiten Alternative der Erfindung d. h. mit einem Haken 29 an den U-Schenkeln 4, 5 als Mittel zur Aufnahme eines Drahtes 6. Dabei ist in den beiden Darstellungen der Fig. 10 der Draht 6 jeweils einmal in der "normalen" unteren Lage und einmal in einer zweiten, bei einer entsprechenden Position des Weinbergpfahls 1 im Weinberg möglichen, Lage dargestellt. In der "normalen" unteren Lage liegt der Draht 6 in der Aufnahmetasche 10 und wird durch die Zunge 14 gegen Aushängen gesichert. Bei der in Fig. 10 a dargestellten oberen zweiten Lage des Drahtes 6' befindet sich der Weinbergpfahl 1 in einer Senke im Weinberg und der Draht 6' wird durch den Haken 29 am Weinbergpfahl 1 gesichert. Bei der Darstellung gemäß der Fig. 10 b befindet sich der Weinbergpfahl 1 in einem Weinberg, in dem die Weinbergpfähle 1 einer Zeile entlang eines Hanges angeordnet sind. Auch hierbei wird der Draht 6' in seiner zweiten oberen Lage durch den Haken 29 gesichert, so daß der Draht 6 nicht durch den Schlitz 15 in der Aufnahmetasche 10 herausfallen kann.

Anhand der Fig. 11 soll nun nochmals der positive Einfluß der nach außen abgebogenen Endbereiche der U-Schenkel 4, 5 auf die Standfestigkeit des Weinbergpfahls 1 erläutert werden. Dabei sind zur Vereinfachung die an den U-Schenkeln 3, 4 ausgebildeten Längsrippen 16, 17 bzw. Haken 29 weggelassen worden.

Die Fig. 11 a zeigt einen Weinbergpfahl 1 gemäß dem Stand der Technik, bei dem die Endbereiche der U-Schenkel 4, 5 nach innen abgebogen sind, so daß sich ein relativ geschlossenes Querprofil des Weinbergpfahls 1 ergibt. Neben der Gefahr, daß sich bei dem aus dem Stand der Technik bekannten Weinbergpfahl 1 ein im Erdboden vorhandener Stein 37 zwischen den Randbereichen 13 der nach innen ausgebildeten Rinnen 7, 8 festsetzt, wodurch der Weinbergpfahl 1 beschädigt werden kann, kann eine schädliche Vorspannung im Inneren des Weinbergpfahls 1 dadurch entstehen, daß die von dem Weinbergpfahl 1 umschlossene Erdsäule 38 durch den Stein 37 stark komprimiert wird. Beim Einschlagen des in Fig. 11 a dargestellten bekannten Weinbergpfahls 1 in den Erdboden kann es dann aufgrund eines im Inneren des Weinbergpfahls 1 eingeschlossenen Steins 37 zu einer Pfropfwirkung im unteren Bereich des Weinbergpfahls 1 kommen, so daß sich zum einen der untere Bereich des Weinbergpfahls 1 tulpenartig weitet, sich zum anderen der oberhalb des Steins 37 befindende Bereich des Weinbergpfahls 1 nicht ausreichend mit Erde füllt. Durch die tulpenartige Verbreiterung des Weinbergpfahls 1 wird zum einen der Weinbergpfahl 1 beschädigt, vergrößert sich zum anderen der Widerstand beim weiteren Einschlagen des Weinbergpfahls 1. Auch hierdurch kann es zu Beschädigungen oder Deformationen des Weinbergpfahls 1 kommen, wobei diese Beschädigungen teilweise zunächst nicht sichtbar sind, später jedoch zu einem irreparablen Schaden am Weinbergpfahl 1 führen und damit zu dessen Unbrauchbarkeit. Darüber hinaus wird durch die Beschädigung der Randbereiche 13 des Weinbergpfahls 1 durch einen Stein 37 die Legierung oder Beschichtung des Weinbergpfahls 1 beschädigt, wodurch die Korrosionsgefahr erhöht wird.

Die zuvor beschriebenen Gefahren treten bei dem in Fig. 11 b schematisch dargestellten Weinbergpfahl 1 mit nach außen abgebogenen Endbereichen nicht auf. Der erfindungsgemäße Weinbergpfahl 1 weist ein offenes Querprofil auf, wodurch ein Festsetzen oder Verkeilen von Steinen 37 im Inneren des Weinbergpfahls 1 beim Eintreiben des Weinbergpfahls 1 in den Erdboden verhindert wird. Da ein im Erdboden vorhandener Stein 37 beim Eintreiben des Weinbergpfahls 1 aus dessen offenem Querprofil herausweichen kann, kommt es auch nicht zu der zuvor beschriebenen schädlichen Vorspannung und dem tulpenartigen Aufweiten des unteren Bereichs des Weinbergpfahls 1.

Durch die nach außen gerichteten Rinnen 7, 8 weist der erfindungsgemäße Weinbergpfahl 1 gemäß der Fig. 11b eine deutlich größere Querschnittsfläche auf, als der aus dem Stand der Technik bekannte, in Fig. 11 a dargestellte, Weinbergpfahl 1. Aufgrund der größeren Querschnittsfläche des Weinbergpfahls 1, wird der Weinbergpfahl 1 von einem, durch den Halbkreis 39 angedeuteten, größeren Erdvolumen 40 abgestützt. Dabei erfolgt die verbesserte Abstützung des Weinbergpfahls 1 sowohl in Fahrtrichtung 41 einer landwirtschaftlichen Maschine, als auch in Gegenfahrtrichtung 42 der landwirtschaftlichen Maschine. In Gegenfahrtrichtung 42 erfolgt die verbesserte Abstützung aufgrund der durch die nach außen offenen Rinnen 7, 8 zusätzlich zur Abstützung beitragenen Erdvolumina 43 und 44. Diese Abstützung sowohl in Fahrtrichtung 41 als auch in Gegenfahrtrichtung 42 ist insbesondere bei verstärkter Anwendung von Traubenvollerntemaschinen oder Laubschneidemaschinen, wie sowohl in Fahrtrichtung 41 als auch in Gegenfahrtrichtung 42 eingesetzt werden, von großem Vorteil.

Durch die zusätzlich zur Abstützung beitragenden, von den Rinnen 7 und 8 umschlossenen, Erdvolumina 43 und 44 wird darüber hinaus auch die Standfestigkeit des Weinbergpfahls 1 gegenüber seitlich angreifenden Winden verbessert. Auch die Gefahr des Verdrehens des Weinbergpfahls 1 um seine Längsachse wird durch die seitlich ausgebildeten Rinnen 7, 8 verringert, da einem solchen Verdrehen des Weinbergpfahls 1 - unabhängig von der Drehrichtung - jeweils eine Rinne 7, 8 durch "Verkrallen'" im Erdboden entgegenwirkt.

Bei dem erfindungsgemäßen Weinbergpfahl 1 gemäß Fig. 11 b ergibt sich darüber hinaus noch ein weiterer Vorteil, wenn der Weinbergpfahl 1 derart in einen Hang eingeschlagen ist, daß der Hang in Gegenfahrtrichtung 42 abfällt. Bei starken Regengüssen wird dann der abgeschwemmte Erdboden durch das offene Querprofil des Weinbergpfahls 1 zumindest teilweise zurückgehalten. Dieser Effekt, der sich bei einem einzelnen Weinbergpfahl 1 nicht oder kaum auswirkt, führt jedoch bei einem Weinberg mit mehreren hunderten oder tausenden Weinbergpfählen 1 zu einem den Erdboden zurückhaltenden Effekt.

Abschließend soll anhand der Fig. 12 die Herstellung eines erfindungsgemäßen Weinbergpfahls 1 gemäß der zweiten Alternative, wie er in den Fig. 6 bis 10 dargestellt ist, kurz erläutert werden. Die Fig. 12 zeigt ein Walzenpaar 45, mit einer Oberwalze 46 und einer Unterwalze 47 und einem zwischen der Oberwalze 46 und der Unterwalze 47 gebildeten Walzspalt 48. In dem Walzspalt 48 wird ein Metallblech 2 geführt, daß nach dem Durchlaufen durch eine Vielzahl von jeweils unterschiedlich ausgebildeten Walzenpaaren - von denen in Fig. 12 lediglich ein Walzenpaar 45 dargestellt ist - einen Querschnitt gemäß dem in den Fig. 6 bis 10 dargestellten Weinbergpfahl 1 aufweist. Aus dem in Fig. 12 dargestellten Metallblech 2 sind bereits die Haken 29 ausgestanzt und entsprechend ihrer endgültigen Form abgebogen. Damit die Haken 29 nun beim Durchlaufen des Metallblechs 2 durch die einzelnen Walzenpaare 45 nicht wieder verformt, insbesondere plattgedrückt werden, sind in der Unterwalze 47 korrespondierend zu der Position der Haken 29 Ringnuten 49 angeordnet.

Hat das Metallblech 2 sämtliche Walzenpaare 45 durchlaufen, wobei einzelne Walzenpaare auch senkrecht zur Transportrichtung des Metallblechs 2 angeordnet sein können, so daß durch diese Walzenpaare insbesondere die Endbereiche des Metallblechs 2 zur Herstellung der U-förmigen Rinnen 7, 8 umgebogen werden können, so wird das fertig profilierte Metallblech 2 entsprechend der gewünschten Länge des Weinbergpfahls 1 abgeschnitten.

Welche der in den Figuren dargestellten Ausführungsform des erfindungsgemäßen Weinbergpfahls 1 jeweils eingesetzt wird, hängt unter anderem von dem jeweiligen Weinbaugebiet und den damit verbundenen Anbaubedingungen ab. Insbesondere dort, wo traditionsgemäß Weinbergpfähle 1 mit einer geringeren Länge verwendet werden, kann bevorzugt ein Weinbergpfahl 1 gemäß den Fig. 6 bis 10 eingesetzt werden.

## Patentansprüche

1. Pfahl aus profilgewalztem Metallblech (2) für den Wein- oder Obstbau, insbesondere Weinbergpfahl, mit einem im wesentlichen U-förmigen Querschnitt, mit einem U-Rücken (3) und mit zwei U-Schenkeln (4, 5), die in ihrem Endbereich abgebogen sind und mit Mitteln zur Aufnahme von Drähten (6), wobei die Mittel durch Ausstanzen und/oder Formbiegen aus den U-Schenkeln (4, 5) gebildet sind,
**dadurch gekennzeichnet,**
**daß** die Endbereiche der U-Schenkel (4, 5) im wesentlichen U-förmig nach außen abgebogen sind, so daß die Endbereiche der U-Schenkel (4, 5) offene Rinnen (7, 8) bilden, wobei in den Rinnen (7, 8) zusätzliche Mittel zur Aufnahme der Drähte (6) durch Ausstanzen und/oder Formbiegen aus den Rinnen (7, 8) ausgebildet sind, so daß die Drähte (6) im wesenthichen in Längsrichtung der U-Schenkeln (4, 5) aufgenommen werden.

2. Pfahl nach Anspruch 1, **dadurch gekennzeichnet, daß** die Mittel zur Aufnahme der Drähte (6) in den U-Schenkeln (4, 5) und die Mittel zur Aufnahme der Drähte (6) in den Rinnen (7, 8) jeweils in Drahtrichtung (9) paarweise hintereinanderliegend und im wesentlichen auf gleicher Höhe angeordnet sind.

3. Pfahl nach Anspruch 1 oder 2, **dadurch gekennzeichnet, daß** in den Rinnen (7, 8) eine nach außen offene Aufnahmetasche (10) zur Aufnahme des Drahts (6) ausgebildet sind.

4. Pfahl nach Anspruch 3, **dadurch gekennzeichnet, daß** die Aufnahmetaschen (10) ein im Rücken (11) der Rinnen (7, 8) ausgebildetes Aufnahmefenster (12) und eine im Randbereich (13) der Rinne (7, 8) ausgebildete Zunge (14) aufweisen, so daß ein Draht (6) durch den zwischen Zunge (14) und Randbereich (13) gebildeten Schlitz (15) in die Aufnahmetasche (10) hineingelangen bzw. aus der Aufnahmetasche (10) herausgelangen kann.

5. Pfahl nach einem der Ansprüche 1 bis 4, **dadurch gekennzeichnet, daß** an den U-Schenkeln (4, 5) je mindestens eine nach außen vorstehende Längsrippe (16, 17) ausgebildet ist, wobei die Längsrippen (16, 17) einen nach innen offenen, im wesentlichen U-förmigen Querschnitt aufweisen und in den Längsrippen (16, 17) nach außen offene Aufnahmetaschen (18) zur Aufnahme der Drähte (6) ausgebildet sind.

6. Pfahl nach Anspruch 5, **dadurch gekennzeichnet, daß** die Aufnahmetaschen (18) eine im U-Rücken (19) der Längsrippen (16, 17) ausgebildete Zunge (20) und je ein in den U-Schenkeln (21, 22) der Längsrippen (16, 17) ausgebildetes Aufnahmefenster (23, 24) aufweisen, wobei die beiden Aufnahmefenster (23, 24) durch einen zwischen der Zunge (20) und dem U-Rücken (19) gebildeten Schlitz (25) miteinander verbunden sind, so daß ein Draht (6) durch den Schlitz (25) in die Aufnahmetasche (18) hineingelangen bzw. aus der Aufnahmetasche (18) herausgelangen kann.

7. Pfahl nach Anspruch 4 und 6, **dadurch gekennzeichnet, daß** sich die im Randbereich (13) der Rinne (7, 8) ausgebildete Zunge (14) nach unten erstreckt, die Aufnahmetasche (10) somit nach oben geschlossen ist, und sich die im U-Rücken (19) der Längsrippen (16, 17) ausgebildete Zunge (20) nach oben erstreckt, so daß sich der Schlitz (25) im oberen Bereich der Aufnahmetasche (18) befindet, die Aufnahmetasche (18) somit nach unten geschlossen ist, jeweils im aufgestellten Zustand des Pfahls betrachtet.

8. Pfahl nach Anspruch 7, **dadurch gekennzeichnet, daß** der U-Rücken (19) der Längsrippen (16, 17) einen größeren Abstand zum jeweiligen U-Schenkel (4, 5) aufweist als der Randbereich (13) der Rinnen (7, 8), die Längsrippen (16, 17) somit eine größere Tiefe als die Rinnen (7, 8) haben.

9. Pfahl nach Anspruch 7 oder 8, **dadurch gekennzeichnet, daß** die Aufnahmefenster (23, 24) in den Längsrippen (16, 17) mindestens genauso hoch sind wie die Aufnahmefenster (12) in den Rinnen (7, 8), wobei der obere Rand (26) der Aufuahmefenster (23, 24) in den Längsrippen (16, 17) mit dem oberen Rand (27) des Aufnahmefensters (12) in den Rinnen (7, 8) fluchtet.

10. Pfahl nach Anspruch 4 und 6, **dadurch gekennzeichnet, daß** sich die im Randbereich (13) der Rinne (7, 8) ausgebildete Zunge (14) nach oben erstreckt, die Aufnahmetasche (10) somit nach unten geschlossen ist, und sich die im U-Rücken (19) der Längsrippen (16, 17) ausgebildete Zunge (20) nach unten erstreckt, so daß sich der Schlitz (25) im unteren Bereich der Aufnahmetasche (18) befindet, die Aufnahmetasche (18) somit nach oben geschlossen ist, jeweils im aufgestellten Zustand des Pfahls betrachtet.

11. Pfahl nach Anspruch 10, **dadurch gekennzeichnet, daß** der U-Rücken (16) der Längsrippen (16, 17) einen kleineren Abstand zum jeweiligen U-Schenkel (3, 4) aufweisen als der Randbereich (13) der Rinnen (7, 8), die Rinnen (7, 8) somit eine größere Tiefe als die Längsrippen (16, 17) haben.

12. Pfahl nach Anspruch 10 oder 11, **dadurch gekennzeichnet, daß** das Aufnahmefenster (12) in den Rinne (7, 8) mindestens genauso hoch ist wie die Aufnahmefenster (23, 24) in den Längsrippen (16, 17), wobei der obere Rand (27) des Aufnahmefensters (12) in den Rinnen (7, 8) mit dem oberen Rand (26) der Aufnahmefenster (23, 24) in den Längsrippen (16, 17) fluchtet.

13. Pfahl nach einem der Ansprüche 1 bis 4, **dadurch gekennzeichnet, daß** an den U-Schenkeln (4, 5) je mindestens ein nach unten offener, zungenartiger Haken (29) als Mittel zur Aufnahme eines Drahtes (6) ausgebildet ist.

14. Pfahl nach Anspruch 13, **dadurch gekennzeichnet, daß** der Haken (29) mit seinem Hauptbereich (30) im wesentlichen parallel zum U-Schenkel (4, 5) verläuft und der Abstand zwischen dem Hauptbereich (30) des Hakens (29) und dem U-Schenkel (4, 5) mindestens so groß ist wie der Durchmesser des Drahtes (6), vorzugsweise bis zu 50 % größer als der Durchmesser des Drahtes (6) ist.

15. Pfahl nach Anspruch 4 und nach Anspruch 13 oder 14, **dadurch gekennzeichnet, daß** sich die im Randbereich (13) der Rinne (7, 8) ausgebildete Zunge (14) nach oben erstreckt, die Aufnahmetasche (10) somit nach unten geschlossen ist, jeweils im aufgestellten Zustand des Pfahls betrachtet.

16. Pfahl nach einem der Ansprüche 13 bis 15, **dadurch gekennzeichnet, daß** sich der Haken (29) in Drahtrichtung (9) gesehen innerhalb des Aufnahmefensters (12) im Rücken (11) der Rinne (7, 8) erstreckt, wobei die lichte Weite (31) zwischen dem Hauptbereich (30) des Hakens (29) und der im Randbereich (13) der Rinne (7, 8) ausgebildeten Zunge (14) und der Abstand zwischen dem unteren Rand (32) des Hakens (29) und dem unteren Rand (33) der Aufnahmetasche (10) mindestens so groß ist wie der Durchmesser des Drahtes (6), vorzugsweise bis zu 50 % größer als der Durchmesser des Drahtes (6) ist.

17. Pfahl nach einem der Ansprüche 13 bis 16, **dadurch gekennzeichnet, daß** der mit dem U-Schenkel (4, 5) verbundene Fuß (35) des Hakens (29) mit dem oberen Rand (27) des Aufnahmefensters (12) fluchtet.

18. Pfahl nach einem der Ansprüche 1 bis 17, **dadurch gekennzeichnet, daß** sich die in den beiden Rinnen (7, 8) ausgebildeten Aufnahmetaschen (10) und/oder die in den Längsrippen (16, 17) ausgebildeten Aufnahmetaschen (18) und/oder die an den U-Schenkeln (4, 5) ausgebildeten zungenartigen Haken (29) jeweils einander paarweise gegenüberliegen, wobei die in den beiden Rinnen (7, 8) ausgebildeten Aufnahmetaschen (10) und/oder die in den Längsrippen (16, 17) ausgebildeten Aufnahmetaschen (18) und/oder die an den U-Schenkeln (4, 5) ausgebildeten zungenartiger Haken (29) vorzugsweise jeweils gleichmäßig in Längsrichtung des Pfahls voneinander beabstandet sind.

## Claims

1. A post made of profile-rolled sheet metal (2) for viniculture or pomiculture, in particularly a vineyard post, having an essentially U-shaped cross-section, with a U-back (3) and with two U-legs (4, 5), which are bent over in their end areas, and having means for receiving wires (6), the means being formed from the U-legs (4, 5) through stamping and/or forming and bending,
**characterized in**
**that** the end areas of the U-legs (4, 5) are bent outward essentially in a U-shape, so that the end areas of the U-legs (4, 5) form open channels (7, 8), additional means for receiving the wires (6) being formed in the channels (7, 8) through stamping and/or forming and bending from the channels (7, 8), so that the wires (6) are received essentially in the longitudinal direction of the U-legs (4, 5).

2. Post according to claim 1, **characterized in that** the means for receiving the wires (6) in the U-legs (4,5) and the means for receiving the wires (6) in the channels (7, 8) are each positioned in the wire direction (9) one behind another in pairs and essentially at the same height.

3. Post according to claim 1 or 2, **characterized in that** an outwardly open receiving pocket (10) for receiving the wire (6) being formed in the channels (7, 8).

4. Post according to claim 3, **characterized in that** the receiving pockets (10) having a receiving window (12) formed in the back (11) of the channels (7, 8) and a tongue (14) formed in the edge area (13) of the channels (7, 8), so that a wire (6) can enter the receiving pocket (10) and/or can exit the receiving pocket (10) through the slot (15) formed between the tongue (14) and the edge area (13).

5. Post according to one of claims 1 to 4, **characterized in that** at least one outwardly protruding longitudinal rib (16, 17) beining formed on each of the U-legs (4, 5), the longitudinal ribs (16, 17) having an inwardly open, essentially U-shaped cross-section and outwardly open receiving pockets (18) for receiving the wires (6) being formed in the longitudinal ribs (16, 17).

6. Post according to claim 5, **characterized in that** the receiving pockets (18) having a tongue (20) formed in the U-backs (19) of the longitudinal ribs (16, 17) and a receiving window (23, 24) formed in each of the U-legs (21, 22) of the longitudinal ribs (16, 17), the two receiving windows (23, 24) being connected to one another by a slot (25) formed between the tongue (20) and the U-back (19) in such a way that a wire (6) can enter the receiving pocket (18) or exit the receptacle pocket (18) through the slot (25).

7. Post according to claims 4 and 6, **characterized in that** the tongue (14) implemented in the edge area (13) of the channels (7, 8) extends downward, the receiving pocket (10) is thus closed on top, and the tongue (20) implemented in the U-back (19) of the longitudinal ribs (16, 17) extends upward, so that the slot (25) is located in the upper area of the receiving pocket (18), and the receiving pocket (18) is thus closed at the bottom, each viewed in the upright state of the post.

8. Post according to claim 7, **characterized in that** the U-back (19) of the longitudinal ribs (16, 17) has a greater distance to the particular U-leg (4, 5) than the edge area (13) of the channels (7, 8), the longitudinal ribs (16, 17) thus have a greater depth than the channels (7, 8).

9. Post according to claim 7 or 8, **characterized in that** the receiving windows (23, 24) in the longitudinal ribs (16, 17) are at least as high as the receiving windows (12) in the channels (7, 8), the upper edge (26) of the receiving windows (23, 24) in the longitudinal ribs (16, 17) aligning with the upper edge (27) of the receiving window (12) in the channels (7, 8).

10. Post according to claims 4 and 6, **characterized in that** the tongue (14) formed in the edge area (13) of the channels (7, 8) extends upward, the receiving pocket (10) is thus closed at the bottom, and the tongue (20) formed in the U-back (19) of the longitudinal ribs (16, 17) extends downward, so that the slot (25) is located in the lower area of the receiving pocket (18), and the receiving pocket (18) is thus closed on top, each viewed in the upright state of the post.

11. Post according to claim 10, **characterized in that** the U-backs (16) of the longitudinal ribs (16, 17) have a smaller distance to the particular U-legs (3, 4) than the edge area (13) of the channels (7, 8), and the channels (7, 8) thus have a greater depth than the longitudinal ribs (16, 17).

12. Post according to claim 10 or 11, **characterized in that** the receiving window (12) in the channels (7, 8) is at least as high as the receiving windows (23, 24) in the longitudinal ribs (16, 17), the upper edge (27) of the receiving window (12) in the channels (7, 8) aligning with the upper edge (26) of the receiving windows (23, 24) in the longitudinal ribs (16, 17).

13. Post according to one of claims 1 to 4, **characterized in that** at least one tongue-like hook (29), which is open on the bottom, is formed in each of the U-legs (4, 5) as means for receiving a wire (6).

14. Post according to claim 13, **characterized in that** the main area (30) of the hook (29) runs essentially parallel to the U-leg (4, 5) and the distance between the main area (30) of the hook (29) and the U-leg (4, 5) is at least as great as the diameter of the wire (6), preferably up to 50 % greater than the diameter of the wire (6).

15. Post according to claim 4 and according to claim 13 or 14, **characterized in that** the tongue (14) formed in the edge area (13) of the channels (7, 8) extends upward, the receiving pocket (10) is thus closed on the bottom, each viewed in the upright state of the post.

16. Post according to one of claims 13 to 15, **characterized in that**, viewed in the direction of the wire (9), the hook (29) extends inside the receiving pocket (12) in the back (11) of the channel (7, 8), the clearance (31) between the main area (30) of the hook (29) and the tongue (14) formed in the edge area (13) of the channels (7, 8) and the distance between the lower edge (32) of the hook (29) and the lower edge (33) of the receiving pocket (10) being at least as great as the diameter of the wire (6), preferably up to 50 % greater than the diameter of the wire (6).

17. Post according to one of claims 13 to 16, **characterized in that** the foot (35) of the hook (29), which is connected to the U-leg (4, 5), is aligned with the upper edge (27) of the receiving window (12).

18. Post according to one of claims 1 to 17, **characterized in that** the receiving pockets (10) formed in the two channels (7, 8) and/or the receiving pockets (18) formed in the longitudinal ribs (16, 17) and/or the tongue-like hooks (29) formed on the U-legs (4, 5) each lie opposite one another in pairs, the receiving pockets (10) formed in the two channels (7, 8) and/or the receiving pockets (18) formed in the longitudinal ribs (16, 17) and/or the tongue-like hooks (29) formed on the U-legs (4, 5) each preferably being at uniform distances from one another in the longitudinal direction of the post,

## Revendications

1. Piquet profilé en tôle métallique laminée (2) pour la culture vigneronne et l'arboriculture, notamment piquet de vigne, ayant une section transversale essentiellement en forme de U avec une dos du U (3) et deux branches du U (4, 5), qui sont courbées dans leur zone d'extrémité, et avec des moyens de réception de fils métalliques (6), les moyens étant formés par matriçage et/ou par formage et pliage à partir des branches du U (4, 5),
**caractérisé en ce**
**que** les zones d'extrémité des branches du U (4, 5) sont essentiellement recourbées en forme de U vers l'extérieur, pour que les zones d'extrémité des branches du U (4, 5) forment des goulottes ouvertes (7, 8), des moyens supplémentaires pour la réception des fils métalliques (6) étant formés par matriçage et/ou par formage et pliage à partir des goulottes (7, 8), pour que les fils métalliques (6) soit réceptionnés sensiblement en direction longitudinale des branches du U (4, 5).

2. Piquet selon la revendication 1, **caractérisé en ce que** les moyens de réception des fils métalliques (6) dans les branches du U (4, 5) et les moyens de réception des fils de métalliques (6) dans les goulottes (7, 8) sont respectivement disposés par paires les uns derrière les autres en direction (9) du fil métalliques et sensiblement à la même hauteur.

3. Piquet selon la revendication 1 ou 2, **caractérisé en ce qu'**une poche de réception (10) ouverte vers l'extérieur est formé dans les goulottes (7, 8), pour la réception du fil métallique (6).

4. Piquet selon la revendication 3, **caractérisé en ce que** les poches de réception (10) comportent une fenêtre de réception (12) formée dans le dos (11) des goulottes (7, 8) et une languette (14) formée dans la zone de bordure (13) de la goulotte (7, 8), pour permettre à un fil métallique (6) de pénétrer dans la poche de réception (10) ou de sortir de la poche de réception (10) à travers la fente (15) formé entre la languette (14) et la zone de bordure (13).

5. Piquet selon l'une quelconque des revendications 1 à 4, **caractérisé en ce qu'**au moins respectivement une nervure longitudinale (16, 17) saillant vers l'extérieur est formée sur les branches du U (4, 5), les nervures longitudinales (16, 17) comportant une section transversale ouverte vers l'intérieur, sensiblement en forme de U et **en ce que** des poches de réception (18) ouvertes vers l'extérieur sont formées dans les nervures longitudinales (16, 17) pour réceptionner les fils métalliques (6).

6. Piquet selon la revendication 5, **caractérisé en ce que** les poches de réception (18) comportent une languette (20) formée dans le dos du U (19) des nervures longitudinales (16, 17), ainsi que respectivement une fenêtre de réception (23, 24) formée dans les branches du U (21, 22) des nervures longitudinales (16, 17), les deux fenêtres de réception (23, 24) étant reliées entre elles par une fente (25) formée entre la languette (20) et le dos du U (19), pour qu'un fil métallique (6) puisse pénétrer dans la poche de réception (18) ou sortir de la poche de réception (18) à travers la fente (25).

7. Piquet selon la revendication 4 et 6, **caractérisé en ce que** la languette (14) formée dans la zone de bordure (13) de la goulotte (7, 8) s'étend vers le bas, **en ce que** de ce fait, la poche de réception (10) est fermée vers le haut et **en ce que** la languette (20) formée dans le dos du U (19) des nervures longitudinales (16, 17) s'étend vers le haut, pour que l'interstice (25) se situe dans la zone supérieure de la poche de réception (18) et que considérée respectivement dans l'état planté du piquet, la poche de réception (18) soit fermée vers le bas.

8. Piquet selon la revendication 7, **caractérisé en ce que** le dos du U (19) des nervures longitudinales (16, 17) présente un plus grand écart par rapport à la branche du U (4, 5) que la zone de bordure (13) des goulottes (7, 8) et que de ce fait, les nervures longitudinales (16, 17) ont une plus grande profondeur que les goulottes (7, 8).

9. Piquet selon la revendication 7 ou 8, **caractérisé en ce que** les fenêtres de réception (23, 24) dans les nervures longitudinales (J 6, 17) sont au moins aussi hautes que les fenêtres de réception (12) dans les goulottes (7, 8), le bord supérieur (26) des fenêtres de réception (23, 24) dans les nervures longitudinales (16, 17) étant aligné sur le bord supérieur (27) de la fenêtre de réception (12) dans les goulottes (7, 8).

10. Piquet selon la revendication 4 et 6, **caractérisé en ce que** la languette (14) formée dans la zone de bordure (13) de la goulotte (7, 8) s'étend vers le haut, **en ce que** de ce fait, la poche de réception (10) est fermée vers le bas et **en ce que** la languette (20) formée dans le du U (19) des nervures longitudinales (16, 17) s'étend vers le bas, pour que l'interstice (25) se situe dans la zone inférieure de la poche de réception (18) et que considérée respectivement dans l'état planté du piquet, la poche de réception (18) soit fermée vers le haut.

11. Piquet selon la revendication 10, **caractérisé en ce que** le dos du U (19) des nervures longitudinales (16, 17) présente une plus petite distance par rapport à la branche du U (3, 4) respective que la zone de bordure (13) des goulottes (7, 8) et que de ce fait les goulottes (7, 8) ont une plus grande profondeur que les nervures longitudinales (16, 17).

12. Piquet selon la revendication 10 ou 11, **caractérisé en ce que** la fenêtre de réception (12) dans les goulottes (7, 8) est au moins aussi haute que les fenêtres de réception (23, 24) dans les nervures longitudinales (16, 17), le bord supérieur (27) de la fenêtre de réception (12) dans les goulottes (7, 8) étant aligné sur le bord supérieur (26) des fenêtres de réception (23, 24) dans les nervures longitudinales (16, 17).

13. Piquet selon l'une quelconque des revendications 1 à 4, **caractérisé en ce qu'**au moins un crochet (29) ouvert vers le bas du type d'une languette est formé sur les branches du U (4, 5), en tant que moyen de réception d'un fil métallique (6).

14. Piquet selon la revendication 13, **caractérisé en ce que** par sa zone principale (30), le crochet (29) s'étend sensiblement à la parallèle de la branche du U (4, 5) et **en ce que** la distance entre la zone principale (30) du crochet (29) et la branche du U (4, 5) est au moins égale au diamètre du fil métallique (6), de préférence jusqu'à 50% supérieure au diamètre du fil métallique (6).

15. Piquet selon la revendication 4 et selon la revendication 13 ou 14, **caractérisé en ce que** la languette (14) formée dans la zone de bordure (13) de la goulotte (7, 8) s'étend vers le haut, et que de ce fait, la poche de réception (10) est fermée vers le bas, respectivement à l'état planté du piquet.

16. Piquet selon l'une quelconque des revendications 13 à 15, **caractérisé en ce que** vu en direction (9) du fil métallique, le crochet (29) s'étend à l'intérieur de la fenêtre de réception (12) dans le dos (11) de la goulotte (7, 8), l'ouverture (31) entre la zone principale (30) du crochet (29) et la languette (14) formée dans la zone de bordure (13) de la goulotte (7, 8) et la distance entre le bord inférieur (32) du crochet (29) et le bord inférieur (33) de la poche de réception (10) étant au moins égale au diamètre du fil métallique (6), de préférence jusqu'à 50% supérieure au diamètre du fil métallique (6).

17. Piquet selon l'une quelconque des revendications 13 à 16, **caractérisé en ce que** le pied (35) du crochet (29) relié à la branche du U (4, 5) est aligné sur le bord supérieur (27) de la fenêtre de réception (12).

18. Piquet selon l'une quelconque des revendications 1 à 17, **caractérisé en ce que** les poches de réception (10) formées dans les deux goulottes (7, 8) et/ou les poches de réception (18) formées dans les nervures longitudinales (16, 17) et/ou les crochets (29) du type de languettes formés sur les branches du U (4, 5) sont respectivement mutuellement opposés par paires, les poches de réception (10) formées dans les deux goulottes (7, 8) et/ou les poches de réception (18) formées dans les nervures longitudinales (16, 17) et/ou les crochets (29) du type de languettes formés sur les branches du U (4, 5) étant respectivement distancés de façon régulière entre eux, en direction longitudinale du piquet.
